## Europäisches Patentamt
## European Patent Office
## Office européen des brevets

(11) Numéro de publication: **0 310 511**
A1

# DEMANDE DE BREVET EUROPEEN

(21) Numéro de dépôt: **88402459.7**

(22) Date de dépôt: **29.09.88**

(51) Int. Cl.⁴: **A 23 L 3/26**
**B 65 G 35/06**

(30) Priorité: **30.09.87 FR 8713539**

(43) Date de publication de la demande:
**05.04.89 Bulletin 89/14**

(84) Etats contractants désignés:
**BE CH DE ES FR GB IT LI NL**

(71) Demandeur: **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur: **Erhart, François**
**75 rue des Vignes**
**F-94230 Cachan (FR)**

**Gersegol, Jean-Pierre**
**5 rue des Azalées**
**F-95270 Luzarches (FR)**

**Piette, Rémi**
**4 rue du Jura**
**F-75013 Paris (FR)**

(74) Mandataire: **Combe, André et al**
**CABINET BEAU DE LOMENIE 55, rue d'Amsterdam**
**F-75008 Paris (FR)**

(54) **Dispositif de transfert de produits à irradier, en particulier de produits alimentaires.**

(57) La présente invention concerne un dispositif applicable plus particulièrement pour réaliser l'irradiation de produits divers contenus dans un chariot (62), réalisant l'entraînement dudit chariot par utilisation d'un dispositif connu constitué par un axe tournant (74) entraînant ledit chariot par l'intermédiaire d'au moins un galet (76) dont l'orientation, par rapport audit axe tournant, est variable et contrôlable, ledit dispositif étant caractérisé en ce que, en vue de permettre l'entraînement dudit chariot dans deux directions orthogonales, le dispositif d'entraînement comporte : - deux axes tournants, situés orthogonalement dans un même plan, l'un au moins desdits axes étant interrompu dans la zone d'intersection théorique desdits axes ; - deux paires de galets (76, 77, 78) montées sur un châssis rigide (61) et disposé selon deux directions orthogonales, les galets de chacune desdites paires comportant des moyens leur assurant la même inclinaison par rapport aux axes tournants avec lesquels lesdits galets sont en contact ; - des moyens d'appui (64, 65), par exemple des rails, dudit chariot et des moyens de sustentation (68, 70) dudit chariot situés entre ledit châssis et lesdits moyens d'appui, lesdits moyens de sustentation permettant un changement orthogonal dans le sens de déplacement du chariot ; et des dispositifs élastiques (72, 73) disposés entre ledit châssis et lesdits moyens de sustentation.

FIG.4

## Description

### Dispositif de transfert de produits à irradier, en particulier de produits alimentaires.

L'invention concerne un dispositif de transfert utilisable dans un ionisateur (ou irradiateur) de produits divers, et en particulier de produits alimentaires.

L'irradiation au moyen de rayons électromagnétiques ou corpusculaires des produits alimentaires pour améliorer leur conservation et leur assainissement est connue depuis plus d'une trentaine d'années.

De nombreux dispositifs existent.

La présente invention porte plus particulièrement sur les moyens de transférer les produits à irradier dans le dispositif d'irradiation.

Les solutions actuelles peuvent se ranger en trois catégories :
- transporteurs au sol,
- véhicules portant une palette et circulant au sol,
- et enfin balancelles comprenant un ou plusieurs colis.

A l'intérieur de la cellule (lieu où se trouve la source), la circulation peut se faire en plusieurs files de part et d'autre d'une source plane verticale, ou bien en rotation autour d'une source cylindrique, ou encore selon les côtés d'un carré ou d'un rectangle autour d'une source verticale cylindrique.

C'est à ce dernier type de circulation que se rapporte l'invention : les produits à irradier sont placés dans des nacelles (ce sont des produits en vrac, dans des emballages ou mieux sur des palettes) qui sont fixées à des chariots qui circulent selon des chemins orthogonaux.

L'avantage d'avoir un irradiateur dit "carré" (ou de façon équivalente rectangle) est de permettre un meilleur remplissage de l'espace lors de l'irradiation : seule une "case" vide correspondant à un chariot est créée qui permet le déplacement.

Par ailleurs, il faut que le chariot se déplace de telle sorte qu'il présente successivement chacune de ses faces à la source pour que l'irradiation soit homogène sur tout le volume de produits contenus dans la nacelle.

Un moyen de transfert des produits habituellement utilisé consiste à placer lesdits produits sur des chariots roulant sur le sol et guidés. A chaque angle sont placés un vérin et une plaque tournante. Le chariot arrive dans l'angle, il se positionne, la plaque tourne, le vérin est actionné, le chariot repart dans la direction perpendiculaire. Le vérin a une course égale à la longueur d'un chariot (case vide). Il est par conséquent nécessaire dans une telle réalisation d'avoir un nombre constant de chariots pleins ou vides.

On a recherché une disposition plus souple avec un déplacement individualisé des chariots pour avoir des cadences plus élevées. Il fallait d'autre part que le dispositif de transfert puisse être adapté à des chariots avec des nacelles suspendues, le dispositif décrit plus haut n'étant pas utilisable dans ce cas.

Un système d'entraînement des chariots du type câble ou chaîne..., c'est-à-dire un système continu, convient tout à fait. Mais, il se pose alors le problème des angles dans lesquels ledit système est forcément interrompu puisque le chariot doit changer de face par rapport à la source en même temps qu'il change de direction.

Un tel système d'entraînement et un moyen pour résoudre ledit problème des angles sont décrits notamment dans le brevet US 4 359 000. Mais le dispositif décrit dans ledit brevet US implique le déplacement du chariot sur des moyens (rails par exemple) fixés sur le sol ; ce mode de déplacement n'est pas souhaitable pour l'application envisagée dans la présente demande.

Pour résoudre ces questions, la demanderesse a sélectionné parmi les dispositifs de transfert existants un dispositif à axe tournant, sur lequel roulent des galets plus ou moins inclinés et elle l'a adapté à son problème spécifique.

Plus particulièrement, l'invention concerne un dispositif utilisable pour réaliser l'irradiation de produits contenus dans une nacelle portée par un chariot, l'entraînement dudit chariot étant réalisé par utilisation d'un dispositif connu constitué par un axe tournant entraînant ledit chariot par l'intermédiaire d'au moins un galet, solidaire dudit chariot, dont l'orientation par rapport audit axe tournant est variable et contrôlable, ledit dispositif étant caractérisé en ce que :
- le chariot est constitué par un châssis portant sur sa face inférieure ladite nacelle et sur sa face supérieure ledit galet ;
- le dispositif d'entraînement dudit chariot, dans les zones des changements de directions orthogonales, comporte :
. deux axes tournants, situés orthogonalement dans un même plan, l'un au moins desdits axes étant interrompu dans la zone d'intersection théorique desdits axes ;
. deux paires de galets montées sur un châssis rigide et disposées selon deux directions orthogonales, les galets de chacune desdites paires comportant des moyens leur assurant la même inclinaison par rapport aux axes tournants avec lesquels lesdits galets sont en contact ;
- et que le dispositif de sustentation dudit chariot est constitué par des rails comportant une bande de roulement en creux, dans laquelle roulent des billes solidaires de la face inférieure du châssis, lesdites billes étant regroupées de façon à former, sur les quatre côtés du châssis, quatre ensembles comportant chacun quatre billes.

De plus, le dispositif selon l'invention comporte avantageusement des dispositifs élastiques disposés entre ledit châssis et lesdites billes.

Selon l'invention, le déplacement du chariot est obtenu par la rotation des galets inclinés sur l'axe tournant horizontal. Pour une vitesse donnée constante de rotation de l'arbre, les lois du mouvement sur le chariot sont données par l'angle d'inclinaison des galets (angle entre la direction du déplacement du chariot et le galet). La vitesse maximale de déplacement est obtenue pour un angle de 45°.

L'inclinaison des galets sur l'axe tournant est commandée par des cames placées **convenablement**.

Ces cames ont par exemple une forme arrondie continuée par une partie plate, la forme arrondie permet l'accélération ou la décélération et la forme plate la vitesse maximum (angle de 45°), un galet dit "de came", monté sur une bielle solidaire du boîtier du galet et qui décrit la forme de la came, permet par exemple d'obtenir l'inclinaison du galet. Un ressort de rappel maintient le galet à 45° en l'absence de came.

Un tel système évite l'emploi d'un variateur de vitesse sur la motorisation de l'axe et le déplacement de chaque chariot peut être réglé indépendamment de celui des autres.

Le système CARTRAC commercialisé par la société TELEFLEX convient parfaitement à ce type d'application.

La circulation des chariots ayant lieu sur des chemins orthogonaux et par des mouvements de translation, les axes tournants sont orthogonaux et obligent à munir chaque chariot de deux paires de galets, les galets de chaque paire roulant sur le même axe. Les deux galets d'une même paire sont reliés entre eux, par exemple par une bielle, de façon à avoir une unité dans l'inclinaison des galets, l'inclinaison étant obtenue au moyen d'une seule came agissant sur l'un des galets ou sur la bielle.

Aux angles, soit les deux axes tournants sont interrompus, soit de préférence un axe tournant est interrompu pour laisser passage à l'autre axe perpendiculaire. Un moyen de transmission du mouvement de rotation couple les deux parties de l'axe interrompu, car il est souhaitable que les axes tournent à la même vitesse pour éviter que les galets ne patinent.

Le déplacement du chariot devant pouvoir être assuré à tout instant, un galet au moins doit être au contact de l'axe tournant. Pour permettre le passage au niveau de l'interruption de l'axe tournant, au moins deux galets sont nécessaires.

L'axe coupé est de préférence celui par lequel le chariot arrive. En effet, le chariot est décéléré lorsqu'il arrive dans l'angle, par le jeu de la came, et il est accéléré dans l'autre direction. Par conséquent, le chariot franchit cet espace avec une vitesse très faible et dans l'autre direction est prêt pour l'accélération.

Les axes tournants sont situés au-dessus du chariot ; ils correspondent bien évidemment aux galets qui sont fixés sur la face supérieure du châssis du chariot.

Par ailleurs, les chariots sont portés par des moyens d'appui ; ces moyens d'appui sont constitués par des rails comportant, sur leur face supérieure, une bande de roulement en creux. La liaison entre les rails et les chariots est réalisée au moyen de billes, dont les dimensions sont en rapport avec celles de ladite bande de roulement, qui sont portées par la face inférieure du châssis du chariot.

Compte tenu de ce que, de façon connue, les rails doivent, dans les zones où s'effectuent les changements de direction orthogonaux des chariots, comporter des interruptions, il est prévu que chaque côté du châssis comportera quatre billes alignées disposées de façon qu'au moins trois desdites billes soient toujours en contact avec lesdits rails.

La liaison entre les billes et le châssis du chariot s'effectue de préférence au moyen d'un dispositif quelconque, connu en lui-même, présentant une certaine élasticité et apte de ce fait à jouer le rôle d'amortisseur. Le rôle de ce dispositif est surtout d'être sensible lors des accélérations et décélérations du chariot. Ledit dispositif est par exemple constitué par des pièces en forme de doigts découpées dans des tôles métalliques présentant les caractéristiques élastiques souhaitées.

Les produits à irradier sont placés dans des nacelles accrochées sur la face inférieure du châssis du chariot.

La description sera mieux suivie à partir des figures.

Sur les figures, il est représenté :
- figure 1 : un type de circulation avec des chemins de transfert orthogonaux ;
- figure 2 : la configuration des moyens d'entraînement dans les angles ;
- figure 3 : la configuration des rails dans les angles ;
- figure 4 : le chariot avec une nacelle suspendue.

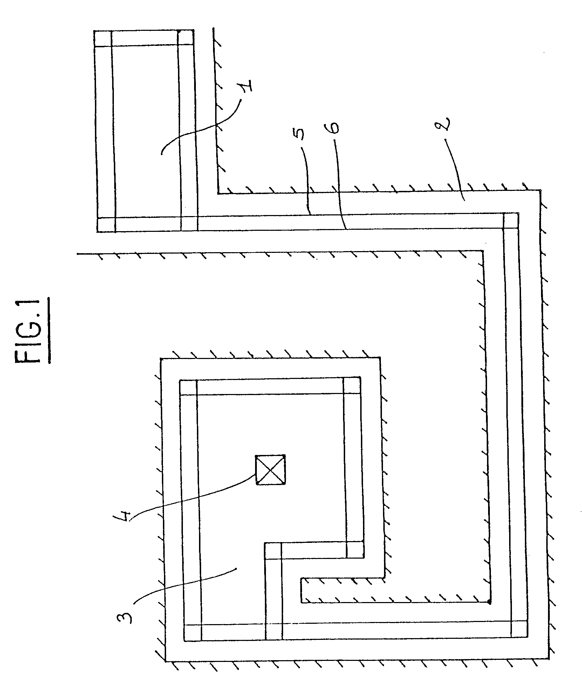

La figure 1 montre une vue très schématique d'un irradiateur à circulation dite "carrée".

L'irradiateur est composé principalement de trois parties : un carrousel 1, une zone d'accès 2 et une cellule d'irradiation 3, dans laquelle se trouve la source irradiante 4.

Dans le carrousel, les produits à irradier sont chargés et déchargés sur des chariots qui les amènent par la zone d'accès 2 dans la cellule d'irradiation 3.

Les zones hachurées représentent les parois en béton.

Les rails, sur lesquels circulent les chariots, sont symbolisés par les traits 5 et 6.

Selon la figure 1, les rails sont au sol et ils ne présentent pas d'interruption, en ce sens que toutes les billes demeurent continuellement au contact de la bande de roulement pendant le passage en angle.

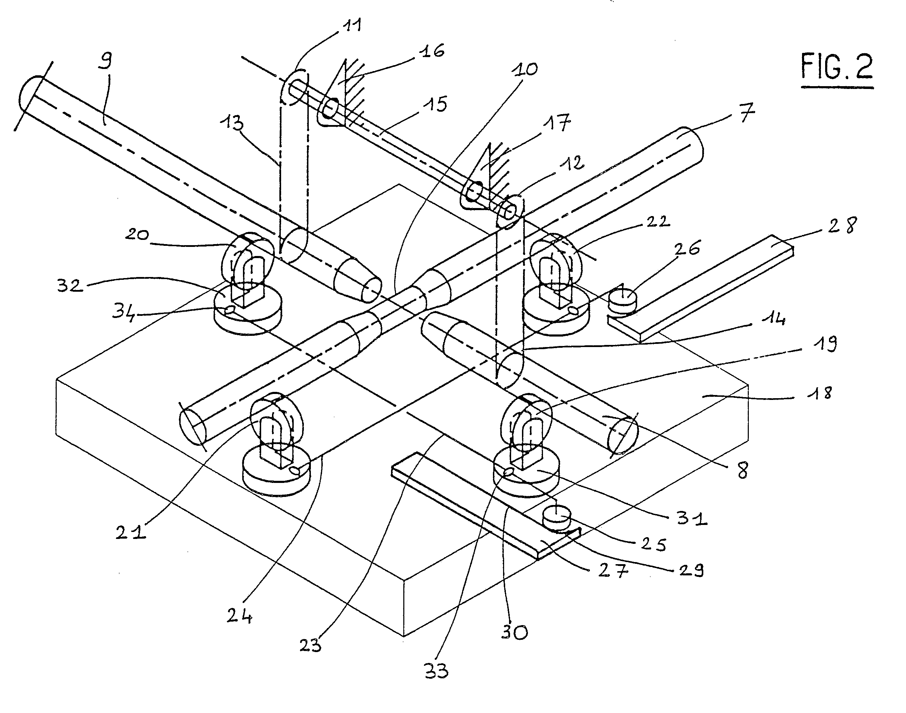

La figure 2 montre plus précisément l'axe tournant non interrompu 7 et les deux parties 8 et 9 de l'axe tournant perpendiculaire par lequel arrive le chariot. Le diamètre de l'axe 7 a été réduit en 10 au niveau de l'interruption pour minimiser la dimension de la coupure.

Un moyen de transmission composé de poulies 11 et 12, de courroies 13 et 14 et d'un arbre 15, fixé sur un bâti quelconque par des moyens 16, 17, permet de transmettre le mouvement de rotation entre les parties 8 et 9 de l'axe tournant interrompu.

Sur le dessus 18 d'un châssis sont montées deux paires de galets 19 et 20, 21 et 22, reliés entre eux dans une même paire par les bielles 23 et 24. Les galets sont disposés pour être au contact de leur axe tournant correspondant, les bielles sont disposées à des hauteurs différentes pour ne pas se gêner.

Chaque bielle porte à son extrémité un galet de came 25 et 26, respectivement, qui, lors du déplacement du châssis 18, vient en contact avec la came correspondante, 27 et 28, respectivement.

Chaque came est fixée à un bâti. Elle possède une forme arrondie 29 prolongée d'une portée plate 30.

Lorsque le galet est au contact de l'extrémité de la partie arrondie, il est perpendiculaire à l'axe tournant, et donc il n'y a pas de mouvement de translation possible selon la direction de l'axe tournant. La partie plate correspond à une inclinaison de 45°, soit une vitesse de déplacement maximum.

Le galet de came par exemple 25 roule sur la came en épousant sa forme, le mouvement est transmis à la bielle 23 qui provoque alors la rotation des boîtiers 31 et 32 des galets, boîtiers sur lesquels elle est fixée en des points 33 et 34.

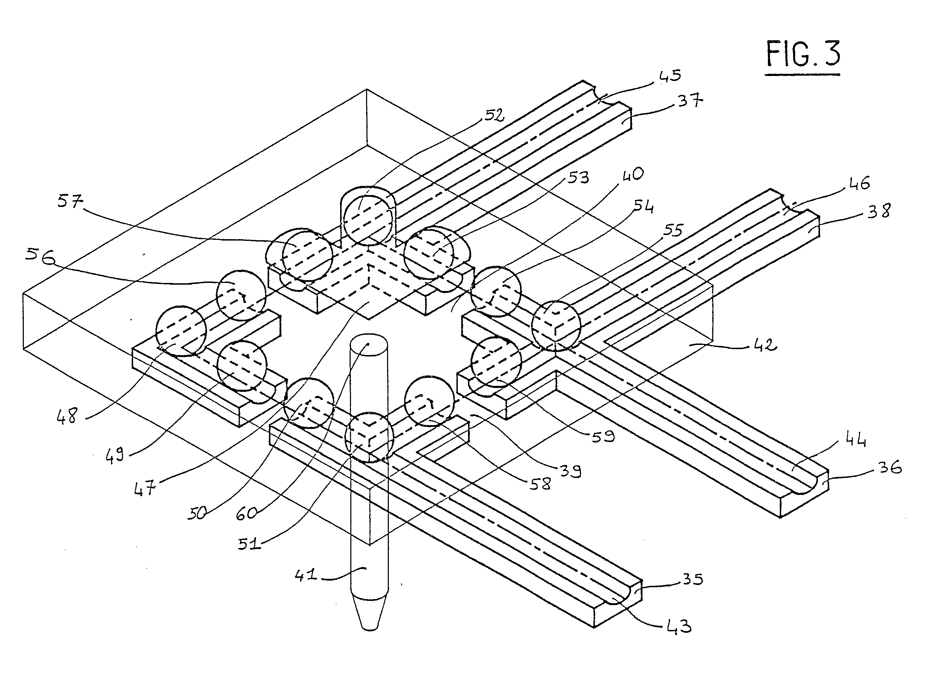

La figure 3 montre la configuration de rails aériens dans les angles.

Les rails 35, 36 et 37, 38 perpendiculaires, sont interrompus en 39 et 40 sur une longueur légèrement supérieure au diamètre du manchon 41 sur lequel est fixée la nacelle non représentée, manchon solidaire de la partie inférieure 42 du châssis. Sur la figure 3, les rails sont interrompus également sur deux autres intervalles symétriquement, cette réalisation particulière n'est pas nécessaire pour l'invention.

Chaque rail est muni d'une bande de roulement 43, 44, 45, 46 ayant un creux de diamètre légèrement supérieur à celui des billes pour permettre leur roulement, par exemple pour une bille de rayon 30 mm, un creux de 30,1 ou 30,2 mm. Celles-ci sont disposées selon quatre ensembles de quatre billes chacun. Chaque ensemble est monté sur une plaque de suspension 47, représentée partiellement sur la figure 3, qui est fixée à la partie inférieure 42 du châssis par des moyens de fixation non représentés ici (soudure par exemple).

On voit clairement sur cette figure 3 que, en dehors des angles, le chariot est porté par quatre billes sur chaque rail, les autres billes disposées perpendiculairement étant inactives.

Sur les rails 35 et 36, les billes 48, 49, 50, 51 et respectivement 52, 53, 54, 55 se déplacent ; sur les rails 37 et 38, ce sont respectivement les billes 48, 56, 57, 52 et 51, 58, 59, 55.

L'espace entre les billes consécutives (par exemple 58, 59 et 53, 54) est au moins égal à la longueur de l'intervalle 39 ou 40. En raison du mouvement de translation du chariot en angle, tout est symétrique par rapport à un axe vertical virtuel passant par le centre 60, point sur lequel les charges sont appliquées au chariot, qui est aussi le centre de symétrie de la plaque de suspension et celui de la partie 42 du chariot.

Les billes présentent un certain débattement en hauteur de façon que, lors des changements de direction, les billes devenant inactives, puissent sortir aisément de leur bande de roulement.

Dans la figure 3 où la nacelle est suspendue à un manchon unique, le centre 60 est aussi celui du manchon 41.

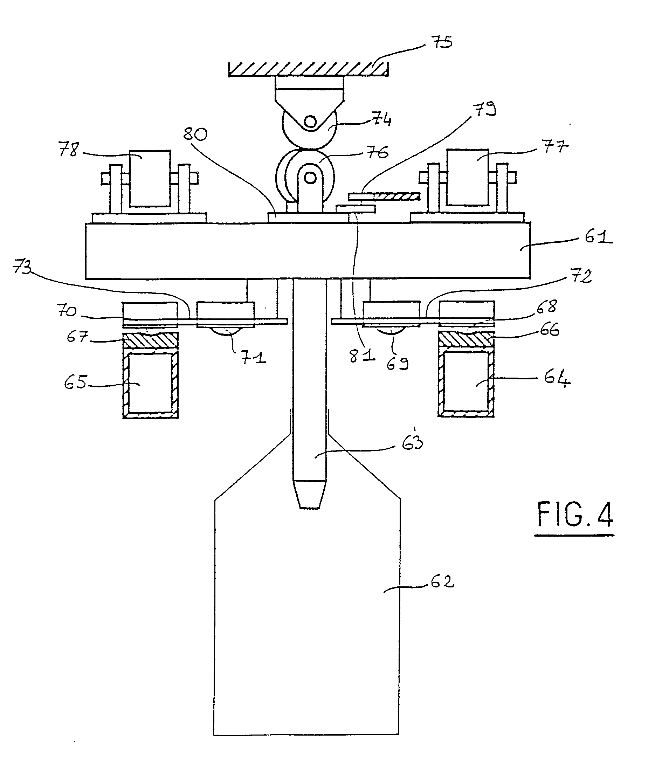

La figure 4 montre le châssis 61 dans son ensemble auquel est suspendue, au moyen du manchon 63, la nacelle (ou chariot) 62 fermée chargée de façon équilibrée avec les produits. Le manchon est fixé sous le châssis, il est muni de moyens d'accrochage des nacelles avec un dispositif d'articulation permettant l'oscillation pour un éventuel rééquilibre de la nacelle par rapport au chariot.

En 64 et 65, les rails (moyens d'appui) sont représentés avec leur bande de roulement 66 et 67 en creux. On ne voit sur la vue que quatre billes (moyens de sustentation) 68, 69, 70, 71, les autres étant derrière.

La liaison entre le châssis 61 et les moyens de sustentation (billes 68, 70) est réalisée à l'aide de moyens élastiques illustrés par les doigts 72 et 73.

Sur l'axe tournant 74 fixé à la paroi 75 roule le galet 76, l'autre galet est situé derrière.

L'autre paire de deux galets 77 et 78 est placée perpendiculairement à la série comprenant 76. La bielle 79 est solidarisée au boîtier 80 du galet 76 par l'articulation 81.

Un tel dispositif combinant des moyens connus et les appliquant spécifiquement à la technologie de l'irradiation permet des cadences élevées de passage en irradiation des chariots, par exemple 17 chariots/h, ce avec des vitesses de déplacement faibles, de l'ordre de 0,45 m/s maximum pour une accélération de 0,1 m/s².

**Revendications**

1. Dispositif utilisable notamment pour réaliser l'irradiation de produits contenus dans une nacelle (62) portée par un chariot, l'entraînement dudit chariot étant réalisé par utilisation d'un dispositif connu constitué par un axe tournant (74) entraînant ledit chariot par l'intermédiaire d'au moins un galet (76), solidaire dudit chariot, dont l'orientation par rapport audit axe tournant est variable et contrôlable, et la sustentation dudit chariot étant réalisée au moyen de rails, ledit dispositif étant caractérisé en ce que :
- le chariot est constitué par un châssis (61) portant sur sa face inférieure ladite nacelle (62) et sur sa face supérieure ledit galet (76) ;
- le dispositif d'entraînement dudit chariot, dans les zones des changements de directions orthogonales, comporte :
. deux axes tournants (7, 8, 9), situés orthogonalement dans un même plan, l'un au moins desdits axes (8, 9) étant interrompu dans la zone d'intersection théorique desdits axes ;
. deux paires de galets (76, 77) montées sur le châssis et disposées selon deux directions orthogonales, les galets de chacune desdites paires comportant des moyens leur assurant la même inclinaison par rapport aux axes tournants avec lesquels lesdits galets sont en contact ;
- et que le dispositif de sustentation dudit chariot est constitué par des rails (35, 36, 37, 38) comportant une bande de roulement en creux (43, 44), dans laquelle roulent des billes (48, 49, 50, 51) solidaires de la face inférieure du châssis, lesdites billes étant regroupées de façon à former, sur les quatre côtés du châssis, quatre ensembles comportant chacun quatre billes.

2. Dispositif selon la revendication 1, caractérisé en ce que l'inclinaison des galets est obtenue au moyen d'un galet dit de came coopérant avec une came fixée à un bâti, ledit galet de came étant placé en bout d'une bielle liée aux galets.

3. Dispositif selon l'une des revendications précédentes caractérisé en ce qu'il comporte des dispositfs élastiques disposés entre ledit chassis et lesdites billes.

## FIG.1

FIG.2

FIG. 3

FIG.4

EP 0 310 511 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | US-A-4 359 000 (TOKUNAGA) * Figures 2,3,4-6,7-10; revendications 1,8; colonnes 2-3; colonne 1, lignes 15-19 * | 1-3 | A 23 L    3/26 B 65 G   35/06 |
| Y | FR-A-1 435 425 (BORGS) * Figures 1-5,9-12; page 2, colonne 1, alinéa 6; résumé * & US-A-3 356 039 | 1 | |
| Y | US-A-3 659 532 (KANATSIZ et al.) * Résumé; figures 8,9,4,5,3; colonne 1, lignes 5-25 * | 1,2 | |
| A | US-A-4 532 869 (KONDO et al.) | | |
| A | RADIATION PRESERVATION OF FOOD PROCEEDINGS OF A SYMPOSIUM JOINTLY ORGANIZED BY THE INTERNATIONAL ATOMIC ENERGY AGENCY AND THE FOOD AND AGRICULTURALE ORGANIZATION OF THE UNITED NATIONS, Bombay, 13-17 novembre 1972, pages 629-636, International Atomic Energy, Vienna, AT; C.W.S. GARD et al.: "Factors influencing food irradiation economics" | | |
| A | US-A-4 583 462 (HALLE) | | |
| A | US-A-4 620 280 (CUNKLIN) | | |
| A | US-A-2 241 399 (HARRIS) | | |

**DOMAINES TECHNIQUES RECHERCHES (Int. Cl.4)**

A 23 L
A 23 B
A 23 D
B 65 G

Le présent rapport a été établi pour toutes les revendications

| Lieu de la recherche | Date d'achèvement de la recherche | Examinateur |
|---|---|---|
| LA HAYE | 21-12-1988 | GUYON R.H. |

EPO FORM 1503 03.82 (P0402)

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant